# EUROPÄISCHE PATENTSCHRIFT

(11) **EP 1 724 970 B1**
(45) Veröffentlichungstag und Bekanntmachung des Hinweises auf die Patenterteilung: **02.02.2011**
(21) Anmeldenummer: 06113912.7
(22) Anmeldetag: 15.05.2006
(51) Int. Cl.: H04L 12/413, H04J 3/00

(54) **Zyklusbasiertes zeitgesteuertes Kommunikationssystem, Teilnehmer des Kommunikationssystems und Verfahren zur Datenübertragung zwischen Teilnehmern des Kommunikationssystems**
Cyclical time-based communication system, the user of the communication system and method for transmitting data between participants of the communication system
Système de communication à base cyclique commandé en temps, utilisateur de ce système de communication et procédé de transmission de données entre des participants du système de communication

(30) Priorität: 20.05.2005 DE 102005023367
(43) Veröffentlichungstag der Anmeldung: 22.11.2006
(73) Patentinhaber: ROBERT BOSCH GMBH, 70442 Stuttgart (DE)
(72) Erfinder: Fuehrer, Thomas, 70839 Gerlingen (DE)

(56) Entgegenhaltungen:
- EP-A- 1 164 751
- DE-A1- 10 112 695
- DE-A1- 19 620 137
- KOPETZ H: "Fault Containment and Error Detection in TTP/C and FlexRay" INTERNET CITATION, [Online] 28. August 2002 (2002-08-28), XP002386705 Gefunden im Internet: URL:http://www.ttech.com/technology/docs/h istory/HK_2002-08-Fault_Contain ment/Error_Detection.pdf> [gefunden am 2006-06-21]

## Beschreibung

Die vorliegende Erfindung betrifft ein zyklusbasiertes zeitgesteuertes Kommunikationssystem umfassend mindestens ein Kommunikationsmedium und mehrere daran angeschlossene Teilnehmer. Den Teilnehmern ist jeweils mindestens ein statischer Zeitschlitz zur Datenübertragung gemäß einem bestimmten Übertragungsprotokoll zugeordnet.

Die Erfindung betrifft außerdem einen Teilnehmer eines zyklusbasierten zeitgesteuerten Kommunikationssystems umfassend mindestens ein Kommunikationsmedium, an das der Teilnehmer angeschlossen ist, und mindestens einen weiteren an das Kommunikationsmedium angeschlossenen Teilnehmer. Den Teilnehmern ist jeweils mindestens ein statischer Zeitschlitz zur Datenübertragung gemäß einem bestimmten Übertragungsprotokoll zugeordnet.

Schließlich betrifft die vorliegende Erfindung auch ein Verfahren zur Datenübertragung zwischen Teilnehmern eines zyklusbasierten zeitgesteuerten Kommunikationssystems umfassend mindestens ein Kommunikationsmedium und mehrere daran angeschlossene Teilnehmer. Dabei wird den Teilnehmern jeweils mindestens ein statischer Zeitschlitz zur Datenübertragung gemäß einem bestimmten Übertragungsprotokoll zugeordnet.

### Stand der Technik

Aus dem Stand der Technik sind zeitgesteuerte Kommunikationssysteme sowie ereignisgesteuerte Kommunikationssysteme bekannt. In zeitgesteuerten Kommunikationssystemen werden Daten beispielsweise gemäß den Protokollen TTP/C, TTCAN oder FlexRay übertragen. In zeitgesteuerten Kommunikationssystemen erfolgt das Senden von Daten bzw. Nachrichten zu genau definierten Sendezeitpunkten. Die Sendezeitpunkte werden anhand eines vorab festgelegten zeitlichen Fahrplans, dem sogenannten Schedule, vorgegeben. Auch der Empfang von Daten wird zu vorgegebenen Empfangszeitpunkten erwartet. Aufgrund des vorab festgelegten zeitlichen Fahrplans steht jedem Teilnehmer des Kommunikationssystems mindestens ein Zeitschlitz pro Kommunikationszyklus zum Senden seiner Daten zur Verfügung. Der Zeitschlitz ist also der "zeitliche Container" für eine zu übertragende Nachricht, durch den eine kollisionsfreie Datenübertragung garantiert werden kann. Wenn einer der Teilnehmer zu einem bestimmten Zeitpunkt die Sendeberechtigung hat, ist es keinem anderen Teilnehmer erlaubt, Daten zu übertragen. Zudem ist es keinem der Teilnehmer erlaubt, eine zusätzliche Nachricht in dem Zeitschlitz eines anderen Teilnehmers zu senden.

Bei ereignisgesteuerten Kommunikationssystemen werden die Daten beispielsweise nach dem CAN-Protokoll übertragen. Beim CAN-Protokoll wird die Technik eines sogenannten Error-Frames genutzt, um Fehler bei der Übertragung oder beim Empfang von Daten bzw. Nachrichten in dem Kommunikationsnetzwerk allen angeschlossenen und empfangsbereiten Teilnehmern zugänglich zu machen. Die Empfänger eines Error-Frames verwerfen die in dem Kommunikationszyklus vorab empfangene Nachricht. Dieser Mechanismus basiert auf einer Fehlerhypothese, wonach ein Übertragungsfehler nicht von allen Teilnehmern gleichzeitig wahrgenommen wird. Das ist beispielsweise bei einem sogenannten Bitkipper aufgrund einer EMV-Störung der Fall. Das Error-Frame sorgt für eine konsistente Sicht auf gestörte Nachrichten für alle an das Kommunikationssystem angeschlossenen und empfangsbereiten Teilnehmer. Der die Daten sendende Teilnehmer sorgt unmittelbar nach dem Empfang des Error-Frames für eine wiederholte Nachrichtenübertragung. Es wird davon ausgegangen, dass die Nachricht auf jeden Fall bei den Empfängern ankommen muss.

Bei zeitgesteuerten Kommunikationssystemen wird meist von einer Fehlerhypothese der konsistenten Nachrichten- und Fehlerübertragung im Kommunikationsnetzwark ausgegangen. Die Wiederholperiode von Nachrichten sorgt im Fehlerfall für eine zeitgerechte Zurverfügungstellung der Daten (Nachrichten) bei den Empfängern. Eine explizite Kennzeichnung von verfälschten oder gestörten Nachrichten ist nicht vorgesehen. Im Fehlerfall erfolgt keine spontane Nachrichtenwiederholung.

Aus der DE 19620167 Al ist ein Protokoll zur Übertragung von Nachrichten in Zeitscheiben für sicherheitskritische Anwendungen auf Basis synchroner Arbitrierung bekannt, durch das Störungen im Kommunikationssystem ermittelt werden. Der Forschungsbericht 23/2002 Version 1.5 der Technischen Universität Wien Fault Contairnment and Error Detection in TTP/C and FlexRay" (28.08.2002, Autor: H. Kopetz) untersucht die Fehlereingrenzungs- und -detektionsmechaniamen sicherheitskritischer zeitgesteuerter Systeme auf Basis der Protokolle TTP/C und FlexRay.

Ausgehend von diesem Stand der Technik liegt der vorliegenden Erfindung die Aufgabe zugrunde, für zeitgesteuerte Kommunikationssyateme eine konsistente Fehlermeldung durch einen beliebigen Teilnehmer des Kommunikationsnetzwerks an die übrigen Teilnehmer zu ermöglichen.

Zur Lösung dieser Aufgabe wird ausgehend von dem verfahren der eingangs genannten Art vorgeschlagen, dass die statischen Zeitschlitze jeweils in zwei Sektoren unterteilt sind, wobei der erste Sektor für die zu übertragenden Daten und der zweite Sektor zur Übertragung einer Fehlernachricht durch einen beliebigen Teilnehmer vorgesehen ist.

### Vorteile der Erfindung

Die vorliegende Erfindung schlägt ein dem Konzept vor, mit dem es erstmals möglich ist, in zeitgesteuerten Kommunikationssystemen eine konsistente Fehlermeldung durch einen beliebigen Teilnehmer des Kommunikationssystems an den sendenden Teilnehmer einer vorab übertragenen Nachricht und an alle übrigen Empfänger der durch den sendenden Teilnehmer vorab übertragenen Nachricht zu tätigen. Eine spontane Nachrichtenwiederholung ist nicht gefordert, kann aber ergänzend ebenfalls vorgesehen werden.

Durch die Übermittlung der Fehlernachricht ist eine Signalisierung eines Empfangsfehlers oder eines Nachrichtenfehlers durch einen beliebigen empfangenden Teilnehmer im Kommunikationsnetzwerk an alle übrigen Teilnehmer möglich. Infolge der empfangenen Fehlernachricht verwerfen alle Teilnehmer die vorab empfangene Nachricht. Eine Nachrichtenkonsistenz wird für alle an das Kommunikationssystem angeschlossenen, empfangsbereiten und synchronisierten Teilnehmer erzielt.

Für Kommunikationssysteme, bei denen ein Kommunikationszyklus sowohl ein statisches Segment mit den statischen Zeitschlitzen als auch ein dynamisches Segment mit dynamischen Zeitschlitzen umfasst, wie beispielsweise bei einer Datenübertragung nach dem FlexRay-Protokoll, wird gemäß einer vorteilhaften Weiterbildung der Erfindung dass in einem Kommunikationszyklus neben den in einem statischen Segment zusammengefassten statischen Zeitschlitzen auch ein dynamisches Segment mit bestimmten Teilnehmern zur Datenübertragung zugeordneten dynamischen Zeitschlitzen variabler Länge vorgesehen ist, wobei zumindest die dynamischen Zeitschlitze, in denen die Teilnehmer bei Bedarf Daten übertragen, jeweils in zwei Sektoren unterteilt sind, wobei ein erster Sektor für die zu übertragenden Daten und ein zweiter Sektor zur Übertragung einer Fehlernachricht durch einen beliebigen Teilnehmer vorgesehen ist. Gemäß dieser Weiterbildung kann das erfindungsgemäße Verfahren in zeitgesteuerten Kommunikationssystemen sowohl während einer Datenübertragung in statischen Zeitschlitzen als auch während einer Datenübertragung in dynamischen Zeitschlitzen realisiert werden. Insofern eignet sich die Erfindung besonders gut für den Einsatz in Kommunikationssystemen, bei denen die Daten sowohl in statischen Zeitschlitzen als auch in dynamischen Zeitschlitzen beispielsweise nach dem FlexRay-Protokoll übertragen werden können.

Gemäß der Erfindung wird vorgeschlagen, dass der zweite Sektor eines dynamischen Zeitschlitzes in einem Kommunikationszyklus nur in dem Fall vorgesehen ist, dass in dem ersten Sektor des dynamischen Zeitschlitzes in dem Kommunikationszyklus Daten übertragen worden sind. Wenn kein Sendewunsch eines Teilnehmers vorliegt, wird die Länge des dynamischen Zeitschlitzes möglichst kurz gehalten (z. B. bei FlexRay 1 Minislot), d.h. es wird kein erster Sektor für die Daten vorgehalten. Deshalb ist es vorteilhaft, wenn in diesem Fall auch auf den zweiten Sektor für die Fehlernachricht verzichtet wird. Gemäß dieser Ausführungsform kann direkt zum nächsten dynamischen Zeitschlitz übergegangen werden, wenn für den aktuellen dynamischen Zeitschlitz kein Sendewunsch eines Teilnehmers vorliegt, und es muss nicht erst das Ende des kompletten dynamischen Zeitschlitzes abgewartet werden. Dabei wird davon ausgegangen, dass keine fehlerhafte Nachricht empfangen werden kann (und deshalb auch keine Fehlernachricht übermittelt werden muss), wenn in dem aktuellen dynamischen Zeitschlitz keine Nachricht übertragen worden ist.

Gemäß einer anderen vorteilhaften Weiterbildung der vorliegenden Erfindung wird vorgeschlagen, dass derjenige Teilnehmer eine Fehlernachricht sendet, der beim Empfang der in dem ersten Sektor des statischen oder des dynamischen Zeitschlitzes übertragenen Daten einen Fehler detektiert hat. Zum Detektieren eines Fehlers gibt es eine Vielzahl verschiedener an sich bekannter Methoden, auf die hier jedoch nicht näher eingegangen werden soll. Tatsache ist, wenn von einem der Teilnehmer in einer empfangenen Nachricht ein Fehler entdeckt wurde, der Teilnehmer nach dem erfindungsgemäßen Verfahren eine Fehlernachricht an die übrigen Teilnehmer übermittelt.

Gemäß einer weiteren bevorzugten Ausführungsform der Erfindung wird vorgeschlagen, dass mindestens einem der Teilnehmer ein Kommunikationsmedium-Wächter (sog. Bus-Guardian) zugeordnet ist, der zumindest während der Dauer des zweiten Sektors eines jeden Zeitschlitzes den Zugriff auf das Kommunikationsmedium für den ihm zugeordneten Teilnehmer freigibt. Die meisten zeitgesteuerten Protokolle, wie beispielsweise auch FlexRay, bieten als zusätzliche Absicherung der statischen Zeitschlitze einen Bus-Guardian. Das ist eine Hardware, die den statischen Zeitschlitz zusätzlich zu dem Kommunikationscontroller freigeben muss, damit der dem Kommunikationscontroller bzw. dem Bus-Guardian zugeordnete Teilnehmer über das Kommunikationsmedium senden kann. Nur wenn der Kommunikationscontroller und der Bus-Guardian beide das gleiche Zeitverständnis haben, ist das Senden einer Nachricht in einem Zeitschlitz möglich. Der Bus-Guardian eines sendenden Teilnehmers lässt keine zusätzliche Versendung von Nachrichten in Zeitschlitzen anderer Teilnehmer zu. Mit der vorgeschlagenen Ausführungsform der Erfindung wird sichergestellt, dass in dem zeitgesteuerten Kommunikationssystem Nachrichten bzw. Fehlernachrichten außerhalb der eigenen statischen Zeitschlitze der jeweiligen Teilnehmer versendet werden können. Durch den vorgeschlagenen Mechanismus ist das Senden einer Fehlernachricht durch einen beliebigen Teilnehmer des Kommunikationssystems ohne Senderecht im statischen Segment möglich. Während des gesamten dynamischen Segments, also auch während einer möglichen Übertragung einer Fehlernachricht in dem zweiten Sektor, gibt der Bus-Guardian den Zugriff auf das Kommunikationsmedium für den ihm zugeordneten Teilnehmer üblicherweise sowieso frei. Insofern erübrigt sich eine gesonderte Freigabe des Zugriffes auf das Kommunikationsmedium während der Dauer des zweiten Sektors des dynamischen Zeitschlitzes eines jeden dynamischen Segments.

Gemäß einer weiteren bevorzugten Ausführungsform der vorliegenden Erfindung wird vorgeschlagen, dass die Fehlernachricht eine eindeutige Kennung des die Fehlernachricht sendenden Teilnehmers umfasst. Des Weiteren wird vorgeschlagen, dass die Fehlernachricht eine Sicherheitsinformation zum Sicherstellen einer fehlerfreien Übertragung der Fehlernachricht umfasst.

Schließlich wird vorgeschlagen, dass die Teilnehmer die in einem Kommunikationszyklus in dem ersten Sektor eines statischen oder dynamischen Zeitschlitzes übertragenen Daten als fehlerhaft verwerfen, falls sie in dem Kommunikationszyklus eine von einem der Teilnehmer gesendete Fehlernachricht empfangen.

Die Augabe der Erfindung wird erfindungsgemäß durch den in unabhängigen Ansprüche 1, 7 und 8 definierten Gegenstand gelöst.

### Zeichnungen

Besondere Ausgestaltungen und weitere Vorteile der vorliegenden Erfindung können den nachfolgend beschriebenen Figuren und der zugehörigen Figurenbeschreibung entnommen werden. Es zeigen:
- Figur 1: einen Kommunikationszyklus eines aus dem Stand der Technik bekannten zyklusbasierten zeitgesteuerten Kommunikationssystems;

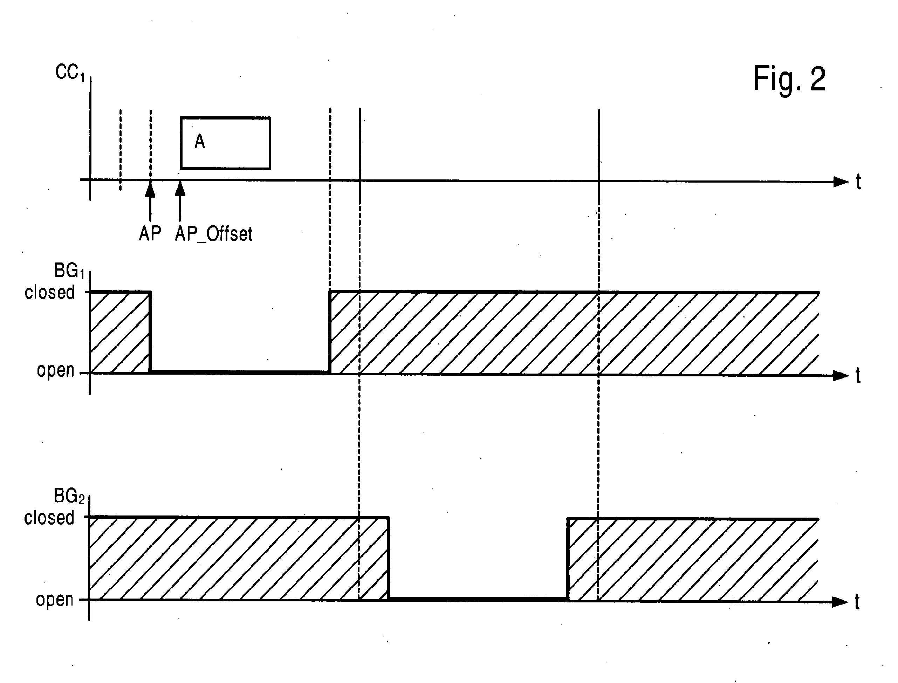

- Figur 2: Signalverläufe von Kommunikationscontrollern und Bus-Guardians von einigen Teilnehmern des Kommunikationssystems, von dem in Figur 1 ein Kommunikationszyklus dargestellt ist;
- Figur 3: Signalverläufe von Kommunikationscontrollern von Teilnehmern des Kommunikationssystems, von dem in Figur 1 ein Kommunikationszyklus dargestellt ist;
- Figur 4: Signalverläufe von Kommunikationscontrollern und Bus-Guardians von zwei Teilnehmern des Kommunikationssystems, von dem in Figur 1 ein Kommunikationszyklus dargestellt ist;
- Figur 5a: ein dynamisches Segment eines Kommunikationszyklus zur Datenübertragung nach einem bekannten Verfahren;
- Figur 5b: ein dynamisches Segment eines Kommunikationszyklus zur Datenübertragung nach dem erfindungsgemäßen Verfahren.

### Beschreibung der Ausführungsbeispiele

In zeitgesteuerten Kommunikationssystemen, wie beispielsweise TTP/C, TTCAN oder FlexRay, erfolgt das Senden von Daten bzw. Nachrichten nach einem vorab festgelegten Sendefahrplan (sogenannter Schedule) zu vorgegebenen Sendezeitpunkten. Auch der Empfang von Nachrichten wird zu bestimmten Empfangszeitpunkten erwartet. Aus der Differenz des Eintreffens und der Planung der Nachrichten werden Korrekturwerte für die lokale Sicht auf eine globale Zeitbasis gesammelt. Eine lokale Uhrensynchronisation korrigiert die lokalen Uhren der Teilnehmer des Kommunikationssystems auf ein globales Optimum nach einem vorab spezifizierten, fehlertoleranten Verfahren. Aufgrund des vorab festgelegten Sendefahrplans steht jedem Teilnehmer mindestens ein statischer Zeitschlitz zur Datenübertragung zur Verfügung, d. h. ein bestimmter Teilnehmer kann die ihm zur Verfügung stehenden Zeitschlitze zur Datenübertragung nutzen oder sie auch ungenutzt verstreichen lassen.

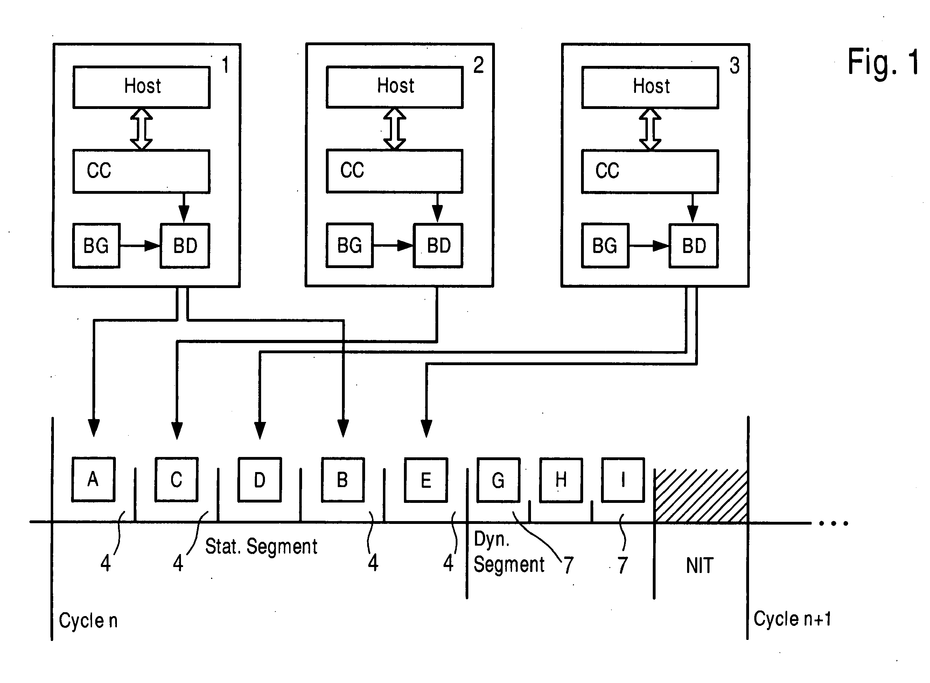

In Figur 1 ist ein Kommunikationszyklus (sog. Cycle) für eine Datenübertragung nach einem aus dem Stand der Technik bekannten Verfahren über ein zeitgesteuertes Kommunikationssystem dargestellt. Ein solcher Kommunikationszyklus ergibt sich beispielsweise bei einer Datenübertragung nach dem FlexRay-Protokoll. Der Kommunikationszyklus umfasst ein statisches Segment mit mehreren Zeitschlitzen 4, in denen nach dem vorgegebenen Sendefahrplan bestimmte Teilnehmer 1, 2, 3 des Kommunikationssystems Nachrichten über das Kommunikationsmedium senden können. Das Kommunikationsmedium des Kommunikationssystems ist bspw. als ein Datenbus ausgebildet. Die Zeitschlitze 4 des statischen Segments sind bestimmten Teilnehmern 1, 2, 3 fest zugeordnet und haben eine fest vorgegebene Länge. Außerdem umfasst der Kommunikationszyklus ein dynamisches Segment, in dem variable Zeitschlitze 7 zur Verfügung stehen, die zur Datenübertragung durch bestimmte Teilnehmer 1, 2, 3 genutzt werden können oder auch ungenutzt verstreichen können. Bei Nicht-Nutzung der variablen Zeitschlitze 7 des dynamischen Segments werden die Zeitschlitze 7 zeitlich verkürzt, um die Bandbreiteneffizienz zu steigern und um innerhalb des dynamischen Segments Platz für andere spontane (ereignisgesteuerte) Nachrichten zuzulassen.

Die Breite der Zeitschlitze 4 des statischen Segments des Kommunikationszyklus ist auf die längste zu übertragende Nachricht zugeschnitten. Außerdem ist beim Festlegen der Breite der Zeitschlitze 4 die Präzision der Uhrensynchronisation zu berücksichtigen. Zusätzlich können noch Sicherheitszeiten eingeplant werden, um Toleranzen ausgleichen zu können. Der Zeitschlitz 4 ist also gewissermaßen der "zeitliche Container" für ein tatsächlich übertragene Nachricht, der eine kollisionsfreie Übertragung über das Kommunikationsmedium des Kommunikationssystems garantiert. Es ist keinem anderen Teilnehmer 1, 2, 3 erlaubt, eine zusätzliche Nachricht in dem Zeitschlitz 4 eines anderen Teilnehmers zu senden.

Am Ende eines Kommunikationszyklus ist ein zeitlicher Puffer in Form einer sogenannten Network Idle Time (NIT) vorgesehen, durch die ebenfalls zeitliche Toleranzen bei der Datenübertragung aufgefangen und ausgeglichen werden können.

Die meisten zeitgesteuerten Protokolle, wie beispielsweise auch FlexRay, bieten eine zusätzliche Absicherung der statischen Zeitschlitze 4 mit Hilfe eines Kommunikationsmedium-Wächters, der auch als Bus-Guardian (BG) bezeichnet wird. Dabei handelt es sich um eine Hardware, die den statischen Zeitschlitz 4 zusätzlich zum Kommunikationscontroller (CC) freigeben muss. Nur wenn beide, der Bus-Guardian BG und der Kommunikationscontroller CC, das gleiche Zeitverständnis haben, ist das Senden einer Nachricht in einem Zeitschlitz 4 möglich. Der Bus-Guardian BG eines sendenden Teilnehmers 1, 2, 3 lässt keine zusätzliche Versendung von Nachrichten in Zeitschlitzen 4 anderer Teilnehmer 1, 2, 3 zu.

Bei ereignisgesteuerten Kommunikationssystemen, wie beispielsweise CAN, wird eine Technik des sogenannten Error-Frames genutzt, um Fehler beim Nachrichtenempfang bzw. bei der Nachrichtenübertragung in dem Kommunikationsnetzwerk allen angeschlossenen und empfangsbereiten Teilnehmern zugänglich zu machen. Die Empfänger eines Error-Frames verwerfen die vorab empfangene Nachricht. Dieser Mechanismus basiert auf einer Fehlerhypothese, dass ein Übertragungsfehler nicht von allen Teilnehmern gleichzeitig wahrgenommen wird, was beispielsweise bei einem Bitkipper infolge einer EMV-Störung der Fall ist. Das Error-Frame sorgt für eine konsistente Sicht auf alle gestörten oder fehlerhaften Nachrichten. Der Sender der Nachricht hat unmittelbar nach dem Empfang des Error-Frames für eine wiederholte Nachrichtenübertragung zu sorgen. Es wird davon ausgegangen, dass die Nachricht auf jeden Fall bei den Empfängern ankommen muss.

Bei zeitgesteuerten Kommunikationssystemen wird meist von einer Fehlerhypothese der konsistenten Nachrichten- und Fehlerübertragung im Kommunikationsnetzwerk ausgegangen. "Konsistent" ist in diesem Zusammenhang als "Zusammengehörigkeit von Fehler und Nachricht" bzw. als "Kopplung zwischen Fehler und Nachricht" zu verstehen. Die Wiederholperiode von Nachrichten sorgt im Fehlerfall für eine zeitgerechte Zurverfügungstellung der Nachrichten bei den Empfängern. Eine explizite Kennzeichnung von verfälschten, gestörten oder fehlerhaften Nachrichten ist bei zeitgesteuerten Kommunikationssystemen nicht bekannt. Im Fehlerfall erfolgt keine spontane Nachrichtenwiederholung.

Mit der vorliegenden Erfindung wird erstmals ein Konzept vorgestellt, das auch in zeitgesteuerten Kommunikationssystemen die Möglichkeit zur konsistenten Fehlermeldung durch einen beliebigen Teilnehmer 1, 2, 3 im Kommunikationsnetzwerk an den Sender der Nachricht und alle anderen Empfänger der gesendeten Nachricht bietet. Die Übermittlung der Fehlernachricht erfolgt vorzugsweise noch während des gleichen Kommunikationszyklus, während dem auch die Nachricht übertragen und empfangen wurde. Eine spontane Nachrichtenwiederholung im statischen Segment nach der Detektion eines Fehlers ist nicht gefordert, aber möglich. Der Bus-Guardian BG aller Teilnehmer 1, 2, 3 des zeitgesteuerten Kommunikationssystems ist derart ausgestaltet, programmiert oder angesteuert, dass alle die zuvor übertragene Nachricht empfangenden Teilnehmer 1, 2, 3 des Kommunikationssystems im Anschluss an den Empfang der Nachricht, d. h. also außerhalb des eigenen statischen Zeitschlitzes 4, eine Nachricht, insbesondere eine Fehlernachricht bzw. ein Error-Frame EF, senden können. Diesbezüglich schlägt die Erfindung einen zusätzlichen Mechanismus vor, um das Senden einer Fehlernachricht EF durch einen beliebigen Teilnehmer 1, 2, 3 ohne Senderecht in einem statischen Zeitschlitz 4 zu ermöglichen.

Die Einführung einer Fehlernachricht EF ermöglicht die Signalisierung eines Empfangs- oder Nachrichtenfehlers bei einem beliebigen Teilnehmer 1, 2, 3 im Kommunikationsnetzwerk an alle anderen Teilnehmer 1, 2, 3. Vorzugsweise verwerfen die Teilnehmer 1, 2, 3 aufgrund der Fehlernachricht EF die vorab empfangene Nachricht. Dadurch wird Nachrichtenkonsistenz unter den angeschlossenen empfangsbereiten und synchronisierten Teilnehmern 1, 2, 3 erzielt.

Zunächst soll zur Erläuterung des Aufbaus und der Implementierung der Erfindung das statische Segment eines Kommunikationszyklusses betrachtet werden. Die statischen Zeitschlitze 4 sind jeweils in zwei Sektoren 4a, 4b unterteilt. Der erste Sektor 4a ist für die zu übertragenden Daten vorgesehen. In dem ersten Sektor 4a findet - wie bisher auch - das eigentliche Senden der Nachricht statt. Zu einem sogenannten Actionpoint (AP)-Offset darf der Sendevorgang beginnen. Dieser erste Sektor 4a muss den Anforderungen eines originalen statischen Zeitschlitzes 4 genügen, d. h. die Nachricht muss zeitlich abgedeckt sein, die Synchronisierungseinschränkungen müssen berücksichtigt werden und mögliche Sicherheitszeiten müssen eingeplant sein. Der zweite Sektor 4b erweitert den statischen Zeitschlitz 4 um mindestens die Zeitdauer der Fehlernachricht EF und den Anforderungen aus der Präzision der globalen Zeit. Das bedeutet, dass das Senden einer Fehlernachricht EF frühestens zum Zeitpunkt Errorframe (EF)-Offset erfolgen darf.

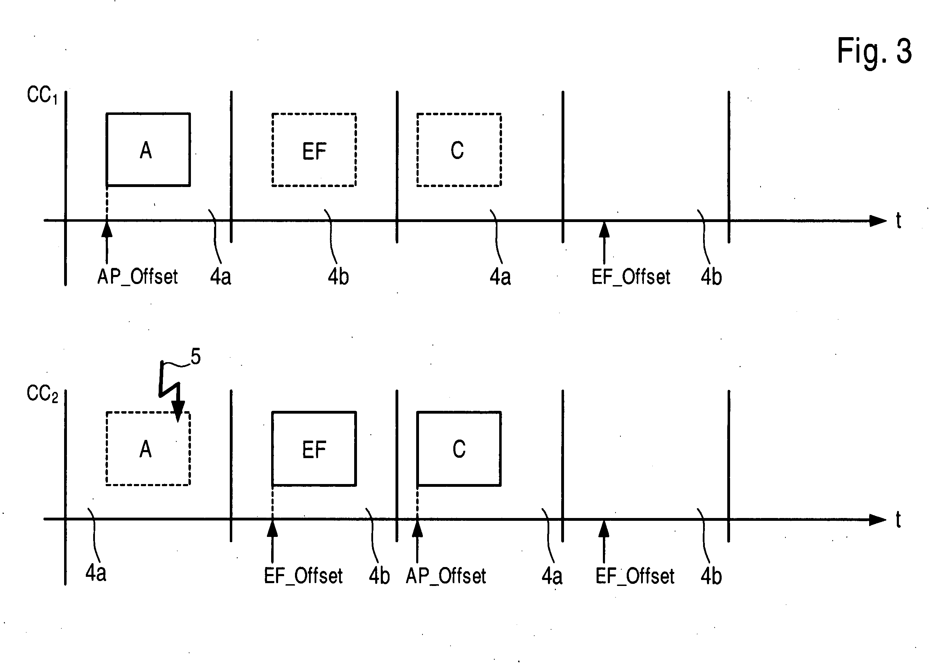

In Figur 3 ist für die gemäß dem Kommunikationszyklus aus Figur 1 übertragenen Nachrichten der Signalverlauf eines Kommunikationscontrollers CC₁ des ersten Teilnehmers 1 des Kommunikationssystems und eines Kommunikationscontrollers CC₂ des zweiten Teilnehmers 2 des Kommunikationssystems dargestellt. Zunächst sendet der Teilnehmer 1 eine Nachricht A zum AP-Offset in dem ersten Sektor 4a eines Zeitschlitzes 4 des Kommunikationszyklus. Der Teilnehmer 2 stellt während des Nachrichtenempfangs von Nachricht A einen Fehler 5 fest. Der Teilnehmer 2 wartet das Ende des ersten Sektors 4a ab. Danach sendet der Teilnehmer 2 zum EF-Offset in dem zweiten Sektor 4b des Zeitschlitzes 4 des Kommunikationszyklus eine Fehlernachricht EF, um den anderen Teilnehmern 1, 3 den Fehler in der Nachricht A zu signalisieren. Der Teilnehmer 2, der den Fehler detektiert hat, und alle anderen empfangenden Teilnehmer 3 in dem Kommunikationsnetzwerk verwerfen zum Ende des Zeitschlitzes 4 die Nachricht A.

Es wäre theoretisch denkbar, den zweiten Sektor 4b eines jeden Zeitschlitzes 4 so breit zu bemessen, dass der die Nachricht A ursprünglich sendende Teilnehmer 1 nochmals die Möglichkeit hat, die Nachricht A in dem Kommunikationszyklus erneut zu übertragen. Das würde jedoch zu relativ breiten Zeitschlitzen 4 und damit auch zu relativ langen Zykluszeiten führen, was nachteilig für bestimmte Einsätze des Kommunikationssystems sein kann. Es sind aber durchaus Einsatzmöglichkeiten denkbar, wo eine derartige Erweiterung der Zeitschlitze 4 mit einem zweiten Sektor 4b, der Platz sowohl für die Fehlernachricht EF als auch für die nochmals übertragene Nachricht A hat, denkbar und sinnvoll sind.

In dem nächsten Zeitschlitz 4 wird in dem ersten Sektor 4a von dem zweiten Teilnehmer 2 zum Zeitpunkt AP-Offset die Nachricht C übertragen und u. a. von dem ersten Teilnehmer 1 empfangen. Da die Nachricht C fehlerfrei ist, bzw. von dem Teilnehmer 1 kein Fehler der Nachricht C detektiert wurde, sendet der Teilnehmer 1 auch keine Fehlernachricht EF in dem zweiten Sektor 4b des Zeitschlitzes 4. Der zweite Sektor 4b bleibt in diesem Fall leer.

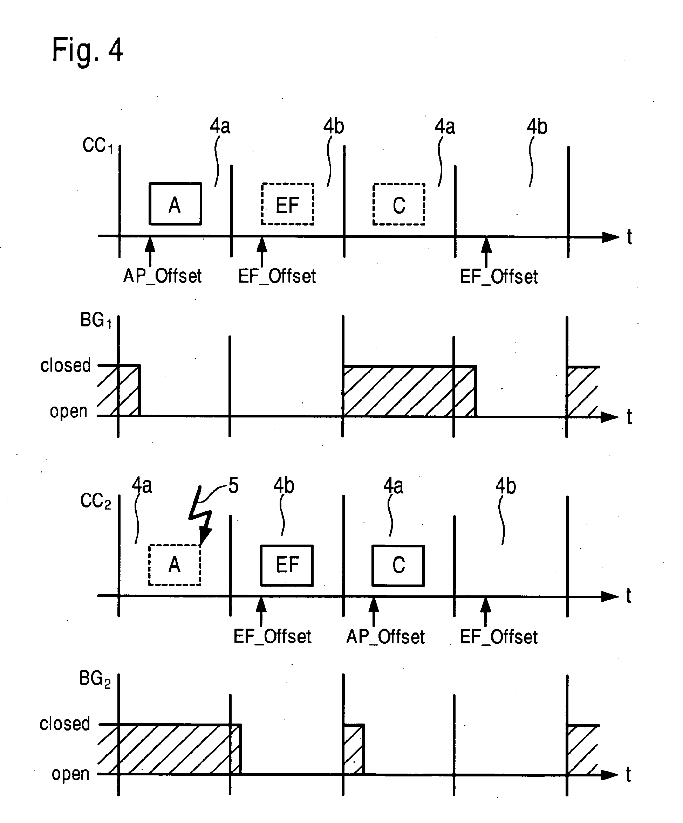

Sind Bus-Guardians BG für die Teilnehmer 1, 2, 3 in dem Kommunikationssystem im Einsatz, sind auch bei den Bus-Guardians BG diese beiden Sektoren 4a, 4b der Zeitschlitze 4 einzuplanen, wie dies beispielsweise in Figur 4 dargestellt ist. Die Unterteilung der Zeitschlitze 4 des statischen Segments in zwei Sektoren 4a, 4b muss im Bus-Guardian BG durch weitere Konfigurationsparameter und Timer realisiert werden. Prinzipiell ist dabei das Zusammenspiel zwischen den Grenzen des Zeitschlitzes 4 und den Actionpoints AP des Protokolls zu sichern. Wenn das Bus-Guardian (BG)-Signal auf "open" steht, kann der dem Bus-Guardian BG zugeordnete Teilnehmer 1, 2, 3 eine Nachricht senden. Wenn das BG-Signal dagegen auf "closed" steht, ist für den zugeordneten Teilnehmer 1, 2, 3 der Zugriff auf das Kommunikationsmedium gesperrt. In Figur 4 ist deutlich zu erkennen, dass in dem zweiten Sektor 4b des statischen Zeitschlitzes 4 zumindest für die Dauer der Fehlernachricht EF, vorzugsweise aus Sicherheitsgründen auch etwas davor (früher) und etwas danach (später), die Bus-Guardians BG aller Teilnehmer 1, 2, 3 des Kommunikationssystems den Zugriff des ihnen zugeordneten Teilnehmers 1, 2, 3 auf das Kommunikationsmedium freigeben, so dass jeder der Teilnehmer 1, 2, 3 theoretisch die Möglichkeit hat, in dem zweiten Sektor 4b des Zeitschlitzes 4 eine Fehlernachricht EF abzusetzen.

Die Fehlernachricht EF selbst sollte möglichst kurz und effizient gestaltet sein. Den größten Vorteil bietet eine Fehlernachricht EF, die eine Identifikation des Senders der Fehlernachricht über eine geeignete Kennung ermöglicht. Hierzu können beispielsweise bei FlexRay die maximal möglichen 64 FlexRay-Teilnehmer berücksichtigt und entsprechend codiert werden. Zusätzlich sollte die Fehlernachricht EF mit einem Prüfbit bzw. einem kurzen Cyclic Redundancy Check (CRC) abgesichert sein.

In der Praxis kann es zu Kollisionen mehrerer Fehlernachrichten EF kommen. Im Idealfall ist jedoch nach wie vor die Decodierung der Fehlernachrichten-Kennung möglich, insbesondere bei hoher Präzision der Uhrensynchronisation und annähernd gleichen Laufzeiten für die Sender der Fehlernachrichten EF. Bei einer auftretenden Kollision ist aber auf jeden Fall ein "Rauschen" erkennbar bzw. es werden gestörte Fehlernachrichten EF erkannt. Diese sollten dann ebenfalls als gültige Fehlernachricht interpretiert werden, allerdings ohne die eindeutige Kennung des Senders. Die vorab gesendete Daten-Nachricht wird vorzugsweise auch in diesem Fall von allen fehlerfreien, empfangsbereiten und synchronisierten Teilnehmern 1, 2, 3 des Kommunikationsnetzwerkes verworfen.

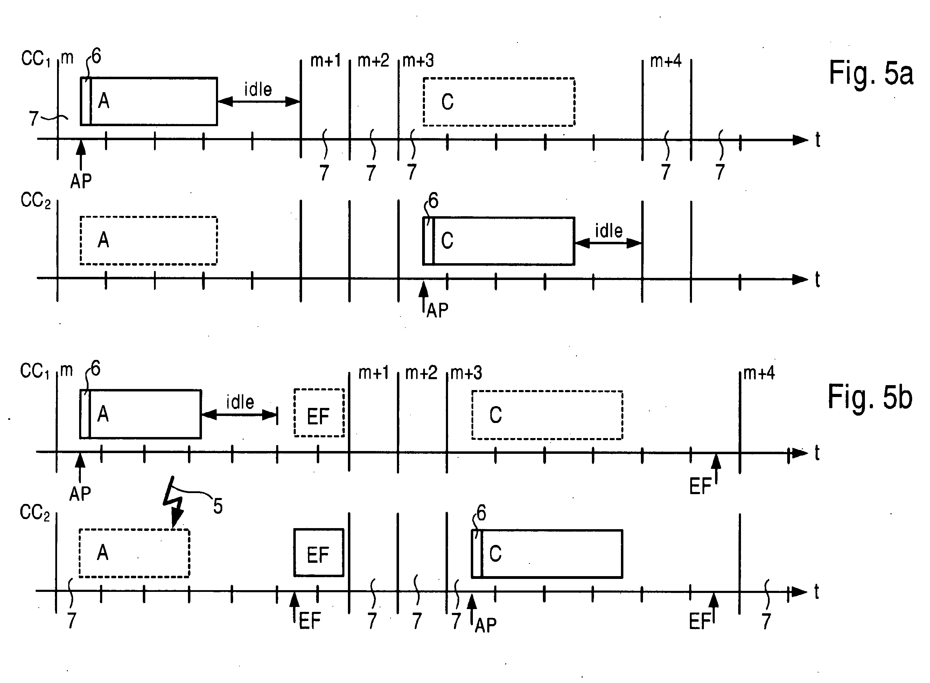

Die dynamischen Zeitschlitze 7 in dem dynamischen Segment eines Kommunikationszyklus bieten die Möglichkeit zum Senden spontaner Nachrichten. In einem bestimmten Bereich der in den dynamischen Zeitschlitzen 7 übertragenen Nachrichten, dem sogenannten Header der Nachricht, ist eine Kennung 6, die sogenannte Frame-ID, abgelegt. Anhand der Figur 5a wird das Übertragen von Daten in den dynamischen Zeitschlitzen 7 des dynamischen Segments eines Kommunikationszyklusses veranschaulicht. Stimmt die Frame-ID 6 mit dem aktuellen Zählerstand des dynamischen Zeitschlitzes 7 (sogenannter dynamischer Slot-Count m) überein, kann eine spontane Nachricht gesendet werden. Hierzu werden bei FlexRay n Minislots benötigt, also so viele Minislots, wie die Länge der Nachricht A erfordert. Danach folgt eine definierte Dauer der Ruhe (sogenannte Idle Time), bevor der Slot-Count m erhöht werden darf. Wird zu einem aktuellen Slot-Count m keine Nachricht gesendet, wie dies beispielsweise bei Slot-Count m+1 und m+2 der Fall ist, weil keine passende Frame-ID zum Senden ansteht, wird nur ein Minislot verbraucht und der Slot-Count m wird erhöht. Die Nachricht mit der nächsten Frame-ID kann gesendet werden. Die Dauer der Minislots und die Grenzen zwischen den dynamischen Slot-Counts m ist wieder über die lokale Sicht auf die globale Zeit geregelt. Dabei ist die erreichbare Präzision der globalen Zeitbasis zu berücksichtigen.

In Figur 5b ist ein Vorschlag dargestellt, wie auch bei einer Datenübertragung in einem zeitgesteuerten Kommunikationssystem über dynamische Zeitschlitze 7 des dynamischen Segments der Kommunikationszyklen nach der Detektion eines Fehlers einer empfangenen Nachricht durch einen beliebigen Teilnehmer 1, 2, 3 des Kommunikationssystems eine Fehlernachricht EF an die übrigen Teilnehmer 1, 2, 3 gesandt werden kann. Vor Einfügung einer Fehlernachricht EF im dynamischen Segment, also unmittelbar nach einer Daten-Nachricht in einem dynamischen Zeitschlitz 7, muss die geforderte Busruhe (Idle Time) abgewartet werden, um danach zum nächsten Minislot die Fehlernachricht zu senden. Die Minislots sind in Figur 5a und 5b durch kleine vertikale Striche auf der horizontal verlaufenden Zeit-Achse dargestellt.

Wird zum Zeitpunkt EF-Offset keine Fehlernachricht EF gesendet, verlängert sich die Idle-Zeit am Bus lediglich bis zum Beginn des nachfolgenden Minislots, bevor der Slot-Count m erhöht werden kann. Es muss nicht erst die der gesamten Länge der Fehlernachricht EF entsprechende Anzahl an Minislots abgewartet werden. Die Minislots für die eigentliche Übertragung der Fehlernachricht EF können eingespart werden. So umfasst beispielsweise der dynamische Zeitschlitz m des Kommunikationscontrollers CC₂ des zweiten Teilnehmers 2 bei dem in Figur 5b dargestellten Ausführungsbeispiel 7 Minislots, da eine Fehlernachricht EF übertragen wird. Im Gegensatz dazu umfasst der dynamische Zeitschlitz m+3 nur 6 Minislots, da eine Fehlernachricht EF nicht übertragen wurde. Wird in einem dynamischen Zeitschlitz 7 keine Daten-Nachricht gesendet, also nur ein Minislot für einen Slot-Count m konsumiert, ist auch keine Fehlernachricht EF zu erwarten. Deshalb kann in einem solchen Fall der Slot-Count m gleich erhöht werden.

Zusammenfassend kann also gesagt werden:
- Zur Realisierung der Erfindung müssen die fehlerfreien, an das Kommunikationsmedium angeschlossenen und synchronisierten Teilnehmer 1, 2, 3 im Anschluss an die statischen Zeitschlitze 4 die Möglichkeit zum Senden von Nachrichten (z. B. der Fehlernachricht EF) zum EF-Offset haben.
- Die Teilnehmer 1, 2, 3 müssen im Anschluss an die statischen Zeitschlitze 4 die Möglichkeit des Nachrichtenempfangs (z. B. Empfang der Fehlernachricht EF) haben.
- Der statische Zeitschlitz 4 muss in zwei Sektoren 4a, 4b unterteilt werden, wobei die Eigenschaften eines statischen Zeitschlitzes 4 für beide Sektoren 4a, 4b erhalten bleiben müssen, z. B. Präzision der globalen Zeit berücksichtigen, um den AP-Offset und den EF-Offset eindeutig zu machen.
- Die Länge der Fehlernachricht EF ist zu definieren und bei der Konfiguration des statischen Zeitschlitzes 4 zu berücksichtigen.
- Mögliche Kollisionen von Fehlernachrichten EF mehrerer Sender sind handzuhaben bzw. aufzulösen.

## Patentansprüche

1. Zyklusbasiertes zeitgesteuertes Kommunikationssystem umfassend mindestens ein Kommunikationsmedium und mehrere daran angeschlossene Teilnehmer (1, 2, 3), wobei den Teilnehmern (1, 2, 3) jeweils mindestens ein statischer Zeitschlitz (4) zur Datenübertragung gemäß einem bestimmten Übertragungsprotokott zugeordnet ist, wobei in einem Kommunikationszyklus neben den in einem statischen Segment zusammengefassten statischen Zeitschlitzen (4) auch ein dynamisches Segment mit bestimmten Teilnehmem (1, 2, 3) zur Datenübertragung zugeordneten dynamischen Zeitschlitzen (7) variabler Länge vorgesehen ist, wobei zumindest die dynamischen Zeitschlitze (7), in denen die Teilnehmer (1, 2, 3) bei Bedarf Daten übertragen, jeweils in zwei Sektoren (7a, 7b) unterteilt sind, wobei ein erster Sektor (7a) für die zu übertragenden Daten und ein zweiter Sektor (7b) zur Übertragung einer Fehlernachricht (EF) durch einen beliebigen Teilnehmer (1, 2, 3) vorgesehen ist, **dadurch gekennzeichnet, dass** die statischen Zeitschlitze (4) jeweils in zwei Sektoren (4a, 4b) unterteilt sind, wobei ein erster Sektor (4a) für die zu übertragenden Daten und ein zweiter Sektor (4b) zur Übertragung einer Fehlemachricht (EF) durch einen beliebigen Teilnehmer (1, 2, 3) vorgesehen ist und dass der zweite Sektor (7b) eines dynamischen Zeitschlitzes (7) in einem Kommunikationszyklus nur in dem Fall vorgesehen ist, dass in dem ersten Sektor (7a) des dynamischen Zeitschlitzes (7) in dem Kommunikationszyklus Daten übertragen worden sind.

2. Kommunikatiorussystem nach Anspruch 1, **dadurch gekennzeichnet, dass** derjenige Teilnehmer (1, 2, 3) eine Fehlemachricht (EF) sendet, der beim Empfang der in dem ersten Sektor (4a, 7a) übertragenen Daten einen Fehler detektiert hat

3. Kommunikationssystem nach einem der Ansprüche 1 bis 2, **dadurch gekennzelchnet,** dass mindestens einem der Teilnehmer (1, 2,3) ein Kommunikationsmedium-Wächter (BG) zugeordnet ist, der zumindest während der Dauer des zweiten Sektors (4b, 7b) eines jeden Zeitschlitzes (4, 7) den Zugriff auf das Kommunikationsmedium für den ihm zugeordneten Teilnehmer (1, 2, 3) freigibt.

4. Kommunikationssystem nach einem der Ansprüche 1 bis 3, **dadurch gekennzeichnet, dass** die Fehlemachricht (EF) eine eindeutige Kennung des die Fehlemachricht (EF) sendenden Teilnehmers (1, 2, 3) umfasst.

5. Kommunikationssystem nach einem der Ansprüche 1 bis 4, **dadurch gekennzeichnet, dass** die Fehlemachricht (EF) eine Sicherheitsinformation zum Sicherstellen einer fehlerfreien Übertragung der Fehlemachricht (EF) umfasst.

6. Kommunikationssystem nach einem der Ansprüche 1 bis 5, **dadurch gekennzeichnet, dass** die Teilnehmer (1, 2, 3) die in einem Kommunikationszyklus in dem ersten Sektor (4a, 4b) übertragenen Daten als fehlerhaft verwerfen, falls sie In dem Kommunikationsyklus eine von einem der Teilnehmer (1, 2,3) gesendete Fehlemachricht (EF) empfangen.

7. Teilnehmer (1, 2, 3) eines zyklusbasierten zeitgesteuerten Kommunikationssystems umfassend mindestens ein Kommunikationsmedium, an das der Teilnehmer (1, 2, 3) angeschlossen ist, und mindestens einen weiteren an das Kommunikationsmedium angeschlossenen Teilnehmer (1, 2, 3), wobei den Teilnehmem (1, 2, 3) jeweils mindestens ein statischer Zeitschlitz (4) zur Datenübertragung gemäß einem bestimmten Übertragungsprotokoll zugeordnet ist, wobei in einem Kommunikationszyklus neben den in einem statischen Segment zusammengefassten statischen Zeitschlitzen (4) auch ein dynamisches Segment mit bestimmten Teilnehmern (1, 2, 3) zur Datenübertragung zugeordneten dynamischen Zeitschlitzen (7) variabler Länge vorgesehen ist, wobei zumindest die dynamischen Zeitschlitze (7), in denen die Teilnehmer (1, 2, 3) bei Bedarf Daten übertragen, jeweils in zwei Sektoren (7a, 7b) unterteilt sind, wobei ein erster Sektor (7a) für die zu übertragenden Daten und ein zweiter Sektor (7b) zur Übertragung einer Fehlemachricht (EF) durch einen beliebigen Teilnehmer (1, 2, 3) vorgesehen ist, **dadurch gekennzeichnet, dass** die statischen Zeitschlitze (4) jeweils in zwei Sektoren (4a, 4b) unterteilt sind, und der Teilnehmer (1, 2, 3) erste Mittel zur Übertragung der Daten in dem ersten Sektor (4a) und zweite Mittel zur Übertragung einer Fehlemachricht (EF) in dem zweiten Sektor (4b) aufweist und dass der zweite Sektor (7b) eines dynamischen Zeitschlitzes (7) in einem Kommunikationszyklus nur in dem Fall vorgesehen ist, dass in dem ersten Sektor (7a) des dynamischen Zeitschlitzes (7) in dem Kommunikationszyklus Daten übertragen worden sind.

8. Verfahren zur Datenübertragung zwischen Teilnehmem (1, 2, 3) eines zyklusbasierten zeitgesteuerten Kommunikationssystems umfassend mindestens ein Kommunikationsmedium und mehrere daran angeschlossene Teilnehmer (1, 2, 3), wobei den Teilnehmern (1, 2, 3) jewells mindestens ein statischer Zeitschlitz (4) zur Datenübertragung gemäß einem bestimmten Übertragungsprotokoll zugeordnet wird, wobei in einem Kommunikationszyklus neben den in einem statischen Segment zusammengefassten statischen Zeitschlitzen (4) auch in einem dynamischen Segment dynamische Zeltschlitze (7) variabler Länge bestimmten Teilnehmern (1, 2, 3) zur Datenübertragung zugeordnet werden, wobei zumindest die dynamischen Zelischlitze (7), in denen die Teilnehmer (1, 2, 3) bei Bedarf Daten übertragen, jeweils In zwei Sektoren (7a, 7b) unterteilt werden, wobei ein erster Sektor (7a) für die zu übertragenden Daten und ein zweiter Sektor (7b) zur Übertragung einer Fehlemachricht (EF) durch einen beliebigen Teilnehmer (1, 2, 3) vorgesehen wird, **dadurch gekennzeichnet, dass** die statischen Zeitschiitze (4) jeweils in zwei Sektoren (4a, 4b) unterteilt werden, wobei der erste Sektor (4a) für die Übertragung der zu übertragenden Daten und der zweite Sektor (4b) zur Übertragung einer Fehlemachricht (EF) durch einen beliebigen Teilnehmer (1, 2, 3) bereitgehalten wird und dass der zweite Sektor (7b) eines dynamischen Zeitschritzes (7) in einem Kommunikadonszyldus nur in dem Fall vorgesehen wird, dass in dem ersten Sektor (7a) des dynamischen Zeitschlitzes (7) in dem Kommunikationszyklus Daten übertragen worden sind.

## Claims

1. Cycle-based time-controlled communication system comprising at least one communication medium and a plurality of subscribers (1, 2, 3) connected thereto, wherein the subscribers (1, 2, 3) each have at least one associated static time slot (4) for data transmission on the basis of a particular transmission protocol, wherein a communication cycle is provided not only with the static time slots (4) combined in a static segment but also with a dynamic segment having particular subscribers (1, 2, 3) for the data transmission of associated dynamic time slots (7) of variable length, wherein at least the dynamic time slots (7), in which the subscribers (1, 2, 3) transmit data when needed, are each divided into two sectors (7a, 7b), wherein a first sector (7a) is provided for the data which are to be transmitted and a second sector (7b) is provided for the transmission of an error message (EF) by any subscriber (1, 2, 3), **characterized in that** the static time slots (4) are each divided into two sectors (4a, 4b), wherein a first sector (4a) is provided for the data which are to be transmitted and a second sector (4b) is provided for the transmission of an error message (EF) by any subscriber (1, 2, 3), and **in that** the second sector (7b) of a dynamic time slot (7) is provided in a communication cycle only in the event that data have been transmitted in the first sector (7a) of the dynamic time slot (7) in the communication cycle.

2. Communication system according to Claim 1, **characterized in that that** subscriber (1, 2, 3) which has detected an error during the reception of the data transmitted in the first sector (4a, 7a) sends an error message (EF).

3. Communication system according to one of Claims 1 and 2, **characterized in that** at least one of the subscribers (1, 2, 3) has an associated communication medium watchdog (BG) which enables access to the communication medium for the subscriber (1, 2, 3) associated therewith at least for the duration of the second sector (4b, 7b) of each time slot (4, 7).

4. Communication system according to one of Claims 1 to 3, **characterized in that** the error message (EF) comprises an explicit identifier for the subscriber (1, 2, 3) which sends the error message (EF).

5. Communication system according to one of Claims 1 to 4, **characterized in that** the error message (EF) comprises a safety information item for safeguarding error-free transmission of the error message (EF).

6. Communication system according to one of Claims 1 to 5, **characterized in that** the subscribers (1, 2, 3) reject the data transmitted in a communication cycle in the first sector (4a, 4b) as erroneous if, during the communication cycle, they receive an error message (EF) which has been sent by one of the subscribers (1, 2, 3).

7. Subscriber (1, 2, 3) in a cycle-based time-controlled communication system comprising at least one communication medium, to which the subscriber (1, 2, 3) is connected, and at least one further subscriber (1, 2, 3) which is connected to the communication medium, wherein the subscribers (1, 2, 3) each have at least one associated static time slot (4) for data transmission on the basis of a particular transmission protocol, wherein a communication cycle is provided not only with the static time slots (4) combined in a static segment but also with a dynamic segment having particular subscribers (1, 2, 3) for the data transmission of associated dynamic time slots (7) of variable length, wherein at least the dynamic time slots (7), in which the subscribers (1, 2, 3) transmit data when needed, are each divided into two sectors (7a, 7b), wherein a first sector (7a) is provided for the data which are to be transmitted and a second sector (7b) is provided for the transmission of an error message (EF) by any subscriber (1, 2, 3), **characterized in that** the static time slots (4) are each divided into two sectors (4a, 4b), and the subscriber (1, 2, 3) has first means for transmitting the data in the first sector (4a) and second means for transmitting an error message (EF) in the second sector (4b) and **in that** the second sector (7b) of a dynamic time slot (7) is provided in a communication cycle only in the event that data have been transmitted in the first sector (7a) of the dynamic time slot (7) in the communication cycle.

8. Method for data transmission between subscribers (1, 2, 3) in a cycle-based time-controlled communication system comprising at least one communication medium and a plurality of subscribers (1, 2, 3) connected thereto, wherein the subscribers (1, 2, 3) each have at least one associated static time slot (4) for data transmission on the basis of a particular transmission protocol, wherein a communication cycle involves not only the static time slots (4) combined in a static segment but also, in a dynamic segment, dynamic time slots (7) of variable length being allocated to particular subscribers (1, 2, 3) for the purpose of data transmission, wherein at least the dynamic time slots (7), in which the subscribers (1, 2, 3) transmit data when needed, are each divided into two sectors (7a, 7b), wherein a first sector (7a) is provided for the data which are to be transmitted and a second sector (7b) is provided for the transmission of an error message (EF) by any subscriber (1, 2, 3), **characterized in that** the static time slots (4) are each divided into two sectors (4a, 4b), wherein the first sector (4a) is kept for the transmission of the data which are to be transmitted and the second sector (4b) is kept for the transmission of an error message (EF) by any subscriber (1, 2, 3), and **in that** the second sector (7b) of a dynamic time slot (7) is provided in a communication cycle only in the event that data have been transmitted in the first sector (7a) of the dynamic time slot (7) in the communication cycle.

## Revendications

1. Système de communication commandé dans le temps sur la base de cycles, comprenant au moins un support de communication et plusieurs abonnés (1, 2, 3) connectés à celui-ci, au moins un créneau temporel statique (4) pour la transmission de données conformément à un protocole de transmission donné étant à chaque fois attribué aux abonnés (1, 2, 3), un segment dynamique comprenant des créneaux temporels dynamiques (7) de longueur variable attribués à certains abonnés (1, 2, 3) pour la transmission de données étant également prévu dans un cycle de communication en plus des créneaux temporels statiques (4) regroupés en un segment statique, au moins les créneaux temporels dynamiques (7) dans lesquels les abonnés (1, 2, 3) transmettent des données en cas de besoin étant respectivement divisés en deux secteurs (7a, 7b), un premier secteur (7a) étant prévu pour les données à transmettre et un deuxième secteur (7b) étant prévu pour la transmission d'un message d'erreur (EF) par un abonné quelconque (1, 2, 3), **caractérisé en ce que** les créneaux temporels statiques (4) sont respectivement divisés en deux secteurs (4a, 4b), un premier secteur (4a) étant prévu pour les données à transmettre et un deuxième secteur (4b) étant prévu pour la transmission d'un message d'erreur (EF) par un abonné quelconque (1, 2, 3), et **en ce que** le deuxième secteur (7b) d'un créneau temporel dynamique (7) n'est prévu dans un cycle de communication que pour le cas où des données ont été transmises dans le premier secteur (7a) du créneau temporel dynamique (7) dans le cycle de communication.

2. Système de communication selon la revendication 1, **caractérisé en ce que** l'abonné (1, 2, 3) qui envoie un message d'erreur (EF) est celui qui a détecté une erreur lors de la réception des données transmises dans le premier secteur (4a, 7a).

3. Système de communication selon l'une des revendications 1 et 2, **caractérisé en ce qu'**un contrôleur de communication (BG) est affecté à au moins l'un des abonnés (1, 2, 3), lequel libère l'accès au support de communication pour l'abonné (1, 2, 3) qui lui est affecté au moins pendant la durée du deuxième secteur (4b, 7b) d'un créneau temporel (4, 7) respectif.

4. Système de communication selon l'une des revendications 1 à 3, **caractérisé en ce que** le message d'erreur (EF) comprend une identification explicite de l'abonné (1, 2, 3) qui envoie le message d'erreur (EF).

5. Système de communication selon l'une des revendications 1 à 4, **caractérisé en ce que** le message d'erreur (EF) comprend une information de sécurité pour garantir une transmission sans défaut du message d'erreur (EF).

6. Système de communication selon l'une des revendications 1 à 5, **caractérisé en ce que** les abonnés (1, 2, 3) rejettent les données transmises dans un cycle de communication dans le premier secteur (4a, 4b) pour cause de défaut s'ils reçoivent dans le cycle de communication un message d'erreur (EF) envoyé par l'un des abonnés (1, 2, 3).

7. Abonné (1, 2, 3) d'un système de communication commandé dans le temps sur la base de cycles, comprenant au moins un support de communication auquel sont connectés les abonnés (1, 2, 3) et au moins un abonné (1, 2, 3) supplémentaire connecté au support de communication, au moins un créneau temporel statique (4) pour la transmission de données conformément à un protocole de transmission donné étant à chaque fois attribué aux abonnés (1, 2, 3), un segment dynamique comprenant des créneaux temporels dynamiques (7) de longueur variable attribués à certains abonnés (1, 2, 3) pour la transmission de données étant également prévu dans un cycle de communication en plus des créneaux temporels statiques (4) regroupés en un segment statique, au moins les créneaux temporels dynamiques (7) dans lesquels les abonnés (1, 2, 3) transmettent des données en cas de besoin étant respectivement divisés en deux secteurs (7a, 7b), un premier secteur (7a) étant prévu pour les données à transmettre et un deuxième secteur (7b) étant prévu pour la transmission d'un message d'erreur (EF) par un abonné quelconque (1, 2, 3), **caractérisé en ce que** les créneaux temporels statiques (4) sont respectivement divisés en deux secteurs (4a, 4b) et l'abonné (1, 2, 3) présente des premiers moyens pour la transmission des données dans le premier secteur (4a) et des deuxièmes moyens pour la transmission d'un message d'erreur (EF) dans le deuxième secteur (4b) et **en ce que** le deuxième secteur (7b) d'un créneau temporel dynamique (7) n'est prévu dans un cycle de communication que pour le cas où des données ont été transmises dans le premier secteur (7a) du créneau temporel dynamique (7) dans le cycle de communication.

8. Procédé de transmission de données entre les abonnés (1, 2, 3) d'un système de communication commandé dans le temps sur la base de cycles, comprenant au moins un support de communication et plusieurs abonnés (1, 2, 3) connectés à celui-ci, au moins un créneau temporel statique (4) pour la transmission de données conformément à un protocole de transmission donné étant à chaque fois attribué aux abonnés (1, 2, 3), des créneaux temporels dynamiques (7) de longueur variable dans un segment dynamique étant également attribués à certains abonnés (1, 2, 3) pour la transmission de données dans un cycle de communication en plus des créneaux temporels statiques (4) regroupés en un segment statique, au moins les créneaux temporels dynamiques (7) dans lesquels les abonnés (1, 2, 3) transmettent des données en cas de besoin étant respectivement divisés en deux secteurs (7a, 7b), un premier secteur (7a) étant prévu pour les données à transmettre et un deuxième secteur (7b) étant prévu pour la transmission d'un message d'erreur (EF) par un abonné quelconque (1, 2, 3), **caractérisé en ce que** les créneaux temporels statiques (4) sont respectivement divisés en deux secteurs (4a, 4b), le premier secteur (4a) étant réservé à la transmission des données à transmettre et le deuxième secteur (4b) étant réservé à la transmission d'un message d'erreur par un abonné (1, 2, 3) quelconque et **en ce que** le deuxième secteur (7b) d'un créneau temporel dynamique (7) n'est prévu dans un cycle de communication que pour le cas où des données ont été transmises dans le premier secteur (7a) du créneau temporel dynamique (7) dans le cycle de communication.
